# FASCICULE DE BREVET EUROPEEN

(11) **EP 0 938 696 B1**
(45) Date de publication et mention de la délivrance du brevet: **17.10.2001**
(21) Numéro de dépôt: 97945913.8
(22) Date de dépôt: 13.11.1997
(51) Int. Cl.: G06F 1/00

(54) **PROCEDE DE SECURISATION ET DE CONTROLE D'ACCES A DES INFORMATIONS A PARTIR D'UNE PLATE-FORME INFORMATIQUE EQUIPEE D'UN MICRO-ORDINATEUR**
VERFAHREN ZUR SICHERHEIT UND ZUGRIFFSKONTROLLE AUF INFORMATION EINES DATENVERARBEITUNGSSYSTEMS MIT MIKROPROZESSOR
METHOD FOR ENSURING SECURITY AND CONTROL OF ACCESS TO DATA FROM A COMPUTER PLATFORM PROVIDED WITH A MICRO-COMPUTER

(30) Priorité: 15.11.1996 FR 9613951
(43) Date de publication de la demande: 01.09.1999
(73) Titulaire: Advanced PC Technologies (APCT), 75011 Paris (FR)
(72) Inventeur: TRUONG, André, F-78350 Jouy-en-Josas (FR); FERRY, Jean-Christophe, F-78170 Montigny-le-Bretonneux (FR); MICHEL, Gilles, F-92320 Châtillon (FR)
(74) Mandataire: Doireau, Marc
(86) Numéro de dépôt international: FR9702034
(87) Numéro de publication internationale: WO9822862

(56) Documents cités:
- EP-A- 0 089 876
- EP-A- 0 421 409
- EP-A- 0 737 907
- WO-A-95/24696
- US-A- 5 191 611
- US-A- 5 444 850
- "BITS: A SMARTCARD PROTECTED OPERATING SYSTEM" COMMUNICATIONS OF THE ASSOCIATION FOR COMPUTING MACHINERY, vol. 37, no. 11, 1 novembre 1994, pages 66-70, 94, XP000485634

## Description

La présente invention concerne un procédé de sécurisation et de contrôle d'accès à des informations telles que des données et/ou des applications, à partir d'une plate-forme informatique équipée d'un micro-ordinateur. Voir : BITS : A SMARTCARD PROTECTED OPERATING SYSTEM" COMMUNICATIONS OF THE ASSOCIATION FOR COMPUTING MACHINERY, Vol. 37, no. 11, 1/11/1994, pages 66-70,94.

D'une manière générale, le fort développement du marché des micro-ordinateurs, de la technologie des réseaux et des supports d'enregistrement de forte capacité et peu onéreux, crée des conditions favorables pour développer notamment la communication et/ou l'échange d'informations, ainsi que des activités commerciales fondées sur la mise à disposition, à la demande et sous forme payante, à des utilisateurs potentiels de données et/ou d'applications à partir de plates-formes informatiques équipées d'un micro-ordinateur, en particulier du type personnel.

Or, par définition, un micro-ordinateur personnel est une machine informatique qui est conçue pour un usage pluraliste (applications personnelles ou professionnelles, ludiques ou techniques,...), c'est-à-dire une machine informatique qui présente une architecture dite « ouverte », en ce sens que de nouveaux éléments tant logiciels que matériels peuvent être aisément ajoutés pour modifier la configuration de la machine en fonction des besoins propres des utilisateurs et/ou des services ou applications auxquels les utilisateurs peuvent accéder gratuitement ou non.

Il en résulte des plates-formes informatiques qui évoluent dans un contexte globalement non sécurisé et qui est d'autant moins sécurisé que cette évolution s'accompagne toujours, en parallèle, de la mise au point de techniques de piratage. Cette évolution parallèle du piratage n'est pas sans poser des problèmes en fonction des utilisations, services et/ou applications qui peuvent être mis en oeuvre à partir de ces plates-formes informatiques à architecture dite « ouverte ».

Pour résoudre ces problèmes, de nombreuses solutions ont été proposées dans le domaine de la sécurité, comme par exemple :
- la mise en place de codes d'identification pour identifier au préalable les utilisateurs avant toute communication ou échange de données,
- la mise en place de codes d'accès pour obtenir l'autorisation d'accéder à des données et/ou à des applications,
- le recours aux techniques d'encodage/ d'encryptage pour garantir la confidentialité ou le secret des données transmises ou échangées, et/ou
- des certificats pour authentifier l'origine et l'exactitude des données transmises ou échangées, ...

Or, ces solutions même avec un degré élevé de sophistication, s'avèrent insuffisantes et, pour s'en convaincre, il suffit de donner l'exemple particulier concernant le développement des activités commerciales qui, comme cela a été évoqué précédemment, sont fondées sur la mise à disposition d'informations, à la demande et sous forme payante. En effet, même avec tout ou partie des solutions proposées précédemment, ces applications ne peuvent être viables si l'accès aux informations se fait à partir d'une plate-forme informatique non sécurisée.

En effet, la fiabilité des contrôles de sécurité qui permettent de garantir qu'un utilisateur est bien habilité à accéder à ces informations et/ou que les droits correspondant à cet accès ont bien été acquittés, par exemple, ne pourra jamais être garantie dès l'instant où ces contrôles sont effectués dans un environnement non sécurisé.

Or, le but de l'invention est justement de proposer un procédé qui permette de sécuriser une plate-forme informatique, en particulier lors de l'accès à des informations telles que des données et/ou applications à partir de ces plates-formes informatiques.

A cet effet, l'invention propose un procédé de sécurisation et de contrôle d'accès à des informations à partir d'une plate-forme informatique équipée d'un micro-ordinateur, caractérisé en ce qu'il consiste :
- à produire au moins un support d'enregistrement non réinscriptible sur lequel sont stockées des informations telles que des données et/ou applications selon un format logique prédéterminé, ainsi qu'un logiciel d'exploitation de ces informations,
- à définir les utilisateurs autorisés ayant un droit d'accès aux informations stockées sur ce support d'enregistrement et les limites éventuelles de ce droit d'accès,
- à configurer ou transformer la plate-forme informatique d'un utilisateur autorisé en un poste de travail sécurisé pour interdire toute intrusion matérielle et/ou logicielle visant à accéder indûment aux informations ou à en faire usage en lieu et place d'un utilisateur autorisé et sans son accord,
- à charger le logiciel d'exploitation à partir du support d'enregistrement qui est lu par un dispositif de lecture approprié de la plate-forme informatique,
- à permettre l'exploitation des informations stockées sur le support d'enregistrement dans les limites du droit acquis par l'utilisateur autorisé, et
- au cours de cette exploitation à échanger et/ou communiquer, de façon sécurisée, des données avec un réseau auquel la plate-forme informatique est reliée.

Le procédé définit une procédure générique qui permet de sécuriser une plate-forme informatique de type micro-ordinateur personnel en réseau, par exemple, de manière à permettre l'accès et l'exploitation en toute sécurité de données et d'applications par les seuls utilisateurs en ayant le droit et ce, dans les limites de ce droit.

Un tel procédé n'impose pas de normes physiques (format physique de supports ou de données) mais définit les éléments fondamentaux d'une architecture matérielle et logicielle permettant d'exploiter en toute sécurité des données protégées par un format logique spécifique.

Cette architecture est caractérisée notamment par :
- l'amorçage du système d'exploitation depuis un support non réinscriptible,
- des standards de sécurisation de données et de communication mettant en oeuvre des algorithmes de cryptographie, des protocoles de communication sécurisés, et
- des composants matériels chargés d'exécuter des fonctions sécurisées.

La sécurité offerte par un tel procédé est de haut niveau pour un surcoût réduit d'architecture matérielle et logicielle.

En effet, le coût des composants matériels à ajouter à une architecture d'un micro-ordinateur personnel de base ou de référence est modeste, les composants utilisés sont standards et peuvent être ajoutés de manière incrémentale à cette architecture de base, et le coût du logiciel est fixe pour chaque système d'exploitation supporté, indépendamment des données et des applications devant être protégées.

D'une manière générale, le procédé peut être mis en oeuvre sur deux types de plates-formes informatiques :
- une plate-forme fermée qui a été conçue initialement pour intégrer les éléments matériels de sécurisation au niveau de l'architecture matérielle de base (au niveau de la carte mère), et
- une plate-forme ouverte où une carte additionnelle a été adjointe pour apporter les composants matériels et/ou logiciels nécessaires et suffisants pour assurer la mise en oeuvre du procédé.

Ainsi, selon un avantage important de l'invention, tout support d'enregistrement même dupliqué ne pourra être exploité sur une machine non conforme au procédé.

Selon un autre avantage, lorsque la plate-forme informatique sécurisée dialogue par le réseau avec un serveur de contrôle ou avec une autre plate-forme informatique, ce dernier est assuré que ce dialogue va se dérouler en toute sécurité.

Selon encore un autre avantage de l'invention, tout éditeur d'applications aura la garantie que les accès et les exploitations des supports d'enregistrement qu'il édite seront bien réalisés conformément aux conditions imposées aux utilisateurs.

Le procédé selon l'invention permet de sécuriser et de contrôler l'accès à des informations, ce procédé comprenant globalement trois phases principales.

La première phase concerne la production d'au moins un support d'enregistrement non réinscriptible, c'est-à-dire dont le contenu ne peut être que lu sans la possibilité de pouvoir modifier ou altérer ce contenu, sur lequel sont stockées les informations à protéger que l'on désire mettre à la disposition d'utilisateurs potentiels, généralement sous forme payante, à partir de plates-formes informatiques équipées d'un micro-ordinateur du type personnel, par exemple.

Dans cette première phase, on définit donc les informations à protéger telles que des données et/ou applications, le système d'exploitation de ces informations et un ensemble de paramètres de contrôle et de sécurité.

Les paramètres de contrôle sont nécessaires pour permettre le fonctionnement du logiciel d'exploitation des données et/ou applications sur les plates-formes informatiques des utilisateurs, alors que les paramètres de sécurité sont nécessaires pour sécuriser l'utilisation du support d'enregistrement d'une part, et l'exploitation des informations stockées sur ce support d'enregistrement d'autre part.

Les paramètres de sécurité pour sécuriser l'utilisation d'un support d'enregistrement sont par exemple et à titre non limitatif :
- un paramètre d'identification propre au support,
- un paramètre d'authentification du contenu du support d'enregistrement, comme par exemple une signature cryptée qui est calculée à partir de certaines informations stockées sur le support d'enregistrement, et
- une table de sécurisation contenant des algorithmes de décodage sous forme cryptée.

Les paramètres de sécurité pour sécuriser l'exploitation des informations stockées sur le support d'enregistrement sont par exemple et à titre non limitatif :
- un paramètre concernant un niveau de sécurité requis pour pouvoir exploiter le support d'enregistrement, et
- au moins un paramètre d'identification propre aux données et/ou à chaque application stockées sur le support d'enregistrement.

Toutes ces informations sont ensuite formatées suivant un format logique prédéterminé, et tout ou partie de ces informations sont encodées ou encryptées pour mieux les protéger selon le schéma défini par la table de sécurisation précitée. Il est à noter que ces opérations sont transparentes vis-à-vis des données et/ou applications à protéger.

Ensuite, les informations sont stockées sur un support d'enregistrement non réinscriptible qui est avantageusement à grande capacité de stockage et peu onéreux, comme par exemple un CDROM (disque optique numérique non effaçable) ou un DVD (vidéodisque numérique).

La deuxième phase concerne la sécurisation des plates-formes informatiques à partir desquelles les supports d'enregistrement pourront être utilisés et exploités en toute sécurité.

D'une manière générale, le procédé consiste à implémenter un dispositif matériel de sécurité avec au moins des mémoires du type ROM pour y enregistrer des logiciels de contrôle et de sécurité, et un contrôleur de gestion.

Il faut alors considérer deux cas, celui des plates-formes informatiques à architecture dite « fermée » et celui des plates-formes informatiques à architecture dite « ouverte ». Une plate-forme informatique est dite à architecture fermée lorsque cette machine a été spécialement conçue ou adaptée pour mettre en oeuvre le procédé, c'est-à-dire qu'elle est déjà sécurisée en intégrant le dispositif matériel de sécurité et le logiciel associé. Par contre, une plate-forme à architecture dite ouverte n'est pas sécurisée pour mettre en oeuvre le procédé et, dans ce cas, il faut la sécuriser en implantant sous la forme d'une carte électronique le dispositif matériel de sécurité et le logiciel associé.

A ce stade, il faut noter qu'une solution de sécurisation uniquement logicielle est par définition fragile, et c'est pour cette raison que le procédé prévoit également la présence d'un dispositif matériel qui rend la sécurité plus fiable.

La fonction essentielle de ce dispositif matériel de sécurité et du logiciel associé, est d'interdire toute intrusion matérielle et/ou logicielle visant à utiliser indûment le support d'enregistrement pour accéder gratuitement aux informations stockées sur ce support ou à en faire usage en lieu et place d'un utilisateur autorisé et sans son accord, et de contrôler en permanence le déroulement du procédé dans les conditions de sécurité requises.

La troisième phase concerne l'accès et l'exploitation par un utilisateur potentiel d'un support d'enregistrement à partir d'une plate-forme informatique dûment sécurisée.

Pour illustrer cette troisième phase, on va expliciter un exemple dans lequel la première phase a été réalisée par un éditeur d'applications qui délivre gratuitement des supports d'enregistrement à des utilisateurs, mais dont l'exploitation est payante selon des processus de facturation classiques.

Lorsque l'éditeur délivre un support d'enregistrement, il remet également à l'utilisateur un support portatif du type carte à puce par exemple.

Sur cette carte à puce, l'éditeur enregistre un certain nombre d'informations, comme par exemple et à titre non limitatif :
- un code d'identification propre à l'utilisateur ou PIN CODE, ce code n'étant toutefois pas imposé pour la mise en oeuvre du procédé,
- les clés de décodage ou de décryptage des informations stockées sur le support d'enregistrement,
- le niveau de sécurité requis pour exploiter les informations, et
- le paramètre d'identification propre aux données et/ou applications, qui correspond à celui enregistré sur le support.

Le support d'enregistrement et le support portatif vont être insérés dans des lecteurs appropriés qui équipent la plate-forme informatique sécurisée de l'utilisateur, et la mise en route générale de la plate-forme peut être effectuée.

Cette mise en route va être réalisée par un logiciel de contrôle qui est stocké dans le dispositif matériel de sécurité et qui va être exécuté pour piloter cette mise en route. A la mise sous tension, le dispositif matériel de sécurité s'initialise et va passer d'un état à un autre état sur la base de critères de temps. D'une manière générale, s'il ne reçoit pas des informations ou un ordre dans un laps de temps déterminé, l'exécution du procédé est automatiquement arrêtée.

Dans un premier temps, le dispositif matériel de sécurité et le logiciel associé vont identifier le support d'enregistrement. Pour ce faire, le paramètre d'identification propre au support d'enregistrement est lu à partir du support et comparé avec celui qui a été préenregistré dans le dispositif matériel de sécurité. Ces deux paramètres sont vérifiés par le contrôleur de gestion, et s'ils ne sont pas identiques ou ne satisfont pas une relation prédéterminée, l'exécution du procédé est automatiquement arrêtée, le support d'enregistrement devient inexploitable et la machine n'est plus sécurisée dans ce sens que le dispositif matériel de sécurité et le logiciel associé ne sont plus accessibles. Par contre, si la vérification est satisfaite, le support d'enregistrement a été correctement identifié mais cela ne suffit pas pour accéder et exploiter les données et/ou applications stockées, car le contenu du support a pu être modifié.

Dans un deuxième temps, le dispositif matériel de sécurité et le logiciel associé vont contrôler l'intégrité du contenu du support d'enregistrement. A cet effet, la signature cryptée enregistrée sur le support est lue et le matériel de sécurité va la comparer avec une signature recalculée par lui-même ou par l'unité centrale de la plate-forme informatique à partir d'informations prélevées sur le support d'enregistrement, cette signature étant ensuite cryptée par le matériel de sécurité.

Si la comparaison de ces deux signatures cryptées ne donne pas un résultat satisfaisant, le dispositif matériel de sécurité en déduit que le contenu du support d'enregistrement a été modifié, c'est-à-dire qu'il n'est pas conforme à celui qui a été initialement produit. La mise en oeuvre du procédé est alors arrêtée, la plate-forme informatique n'est plus sécurisée et, de préférence, le fonctionnement de la plate-forme informatique est verrouillé. Autrement dit, l'utilisateur se trouve alors obligé de remettre en route la plate-forme informatique dans les conditions normales de fonctionnement mais avec impossibilité de pouvoir accéder et exploiter le support d'enregistrement, le dispositif matériel de sécurité et le logiciel associé devenant inaccessibles. Dans le cas contraire, le matériel de sécurité a reconnu l'intégrité des informations stockées sur le support d'enregistrement, c'est-à-dire que ce support est conforme à celui qui a été produit.

Dans un troisième temps, le matériel de sécurité et le logiciel associé vérifient le niveau de sécurité requis pour pouvoir exploiter les données et/ou applications du support d'enregistrement. A cet effet, le niveau de sécurité enregistré sur le support portatif de l'utilisateur est lu et comparé avec celui qui est enregistré sur le support. Si le niveau de sécurité n'est pas satisfait, la plate-forme informatique est verrouillée comme précédemment.

Dans un quatrième temps, le matériel de sécurité et le logiciel associé vérifient si l'utilisateur est autorisé à exploiter les données et/ou applications stockées sur le support d'enregistrement. A cet effet, le dispositif matériel de sécurité lit au moins un paramètre propre à une application par exemple et qui est enregistré sur le support portatif de l'utilisateur et le compare avec le paramètre correspondant enregistré sur le support d'enregistrement. Cette comparaison peut se faire à l'identique ou suivant une relation prédéterminée. Si cette vérification ne donne pas un résultat satisfaisant, la plate-forme informatique est verrouillée comme précédemment.

Dans un cinquième temps, le dispositif matériel de sécurité et le logiciel associé vérifient que le logiciel de base de la plate-forme informatique n'a pas été éventuellement modifié pour détecter ainsi une éventuelle brèche dans la sécurité du procédé. Si une telle brèche est détectée, en utilisant des techniques connues, la plate-forme informatique est verrouillée comme précédemment.

Dans le cas contraire et dans une sixième temps, le dispositif matériel de sécurité et le logiciel associé vont brider le logiciel de base de la plate-forme informatique, notamment lorsque celle-ci est à architecture ouverte, c'est-à-dire que le dispositif matériel de sécurité va en quelque sorte mettre des verrous pour inhiber certaines fonctions du logiciel de base telles que celles qui pourraient normalement donner accès au support d'enregistrement, et mettre en place de nouvelles fonctions nécessaires au bon déroulement de l'exploitation des données et/ou applications à partir du support d'enregistrement, lorsque les contrôles effectués sur ce dernier et l'utilisateur ont été validés.

Avant d'entamer une seconde phase du processus d'amorçage, le dispositif matériel de sécurité et le logiciel associé vont installer, sous une forme standard et indépendante de l'implantation matérielle, une interface permettant d'accéder à l'intégralité des fonctions de sécurité qui seront notamment utilisées par le système d'exploitation lorsque ce dernier démarrera après avoir été chargé à partir du support d'enregistrement.

Jusqu'à maintenant, la première phase du processus de mise en route ou d'amorçage a permis de contrôler le support d'enregistrement et le droit d'accès de l'utilisateur, mais il faut maintenant qu'en retour des contrôles de sécurité soient effectués pour vérifier l'intégrité de la plate-forme informatique tant sur le plan matériel que logiciel.

A cet effet, un logiciel d'amorçage est chargé depuis le support d'enregistrement et est exécuté pour vérifier que les conditions de sécurité qui ont été satisfaites par le support d'enregistrement sous le contrôle de la plate-forme informatique, sont également satisfaites par la plate-forme informatique sous le contrôle du support d'enregistrement.

Ainsi, ce logiciel d'amorçage va notamment s'assurer :
- que le dispositif matériel de sécurité est bien implanté,
- que le logiciel de base de la plate-forme informatique a bien été bridé,
- que le paramètre d'identification propre au support et qui est enregistré dans le dispositif matériel de sécurité correspond bien à celui qui est enregistré sur le support d'enregistrement, et
- que le paramètre d'authentification du contenu du support d'enregistrement correspond à celui qui est également enregistré sur le support d'enregistrement.

Une fois tous ces contrôles effectués, on peut dire en quelque sorte que la plate-forme informatique est certaine d'accéder et d'exploiter un support d'enregistrement qui est conforme à celui qui a été produit et, inversement, le support d'enregistrement est certain d'être exploité par une plate-forme informatique dûment sécurisée et par un utilisateur dûment autorisé et dans la limite des droits qu'il a acquis.

Dans ces conditions, le chargement du système d'exploitation à partir du support d'enregistrement peut être envisagé. Cependant, comme le système d'exploitation est indépendant de celui de la plate-forme informatique, notamment lorsque cette dernière est d'une architecture « ouverte », il peut être nécessaire de faire appel à un logiciel de configuration qui est lu à partir du support d'enregistrement. La fonction générale de ce logiciel de configuration est de stocker dans le dispositif matériel de sécurité tous les paramètres nécessaires et suffisants pour que le logiciel d'exploitation des données et/ou applications et qui est stocké sur le support d'enregistrement puisse être exécuté par le logiciel d'exploitation de la plate-forme informatique.

Le logiciel d'exploitation peut alors être chargé dans la plate-forme informatique à partir du support d'enregistrement pour permettre à l'utilisateur d'exploiter des données et/ou des applications stockées sur le support d'enregistrement et auxquelles il est autorisé à accéder et ce, en toute sécurité non seulement pour lui-même mais également pour l'éditeur des supports d'enregistrement.

Au cours de cette exploitation, la sécurité sera assurée par le logiciel d'exploitation qui a été chargé à partir du support d'enregistrement, ou par les applications elles-mêmes, et il s'appuiera pour cela sur l'interface précitée qui a été installée par le dispositif matériel de sécurité et le logiciel associé à la fin de la première phase du processus d'amorçage.

En effet, pour renforcer la sécurité du procédé, il est préférable que le système d'exploitation des données et/ou applications respecte aussi les fonctions de sécurité appliquées pendant la phase d'amorçage, comme par exemple interdire l'initialisation d'un logiciel non préalablement contrôlé ou l'accès à un périphérique non prévu par le procédé.

Ainsi, pour mettre en oeuvre le procédé selon l'invention, la plate-forme informatique de l'utilisateur doit être sécurisée, et l'utilisateur doit disposer non seulement du support d'enregistrement sur lequel sont au moins enregistrées les données et/ou les applications auxquelles l'utilisateur veut accéder, ainsi que le logiciel d'exploitation de ces données et/ou applications, mais également d'une carte à mémoire qui définit notamment les conditions d'accès à ce support d'enregistrement.

## Revendications

1. Procédé de sécurisation et de contrôle d'accès à des informations à partir d'une plate-forme informatique équipée d'un micro-ordinateur, **caractérisé en ce qu'**il consiste :
- à produire au moins un support d'enregistrement non réinscriptible sur lequel sont stockées des informations telles que des données et/ou applications, ainsi qu'un logiciel d'exploitation de ces informations,
- à définir les utilisateurs autorisés ayant un droit d'accès aux informations stockées sur ce support d'enregistrement et les limites éventuelles de ce droit d'accès, en délivrant à chaque utilisateur un support portatif du type carte à puce où sont enregistrées des informations sur les droits concédés,
- à insérer un support d'enregistrement et un support portatif dans des lecteurs qui équipent la plate-forme informatique,
- à configurer ou transformer la plate-forme informatique d'un utilisateur autorisé en un poste de travail sécurisé pour interdire toute intrusion matérielle et/ou logicielle visant à accéder indûment aux informations ou à en faire usage en lieu et place d'un utilisateur autorisé et sans son accord, cette phase de transformation consistant à faire exécuter par la plate-forme informatique des fonctions de sécurité à partir de paramètres enregistrés dans le support d'enregistrement, le support portatif et la plate-forme informatique,
- à charger le logiciel d'exploitation à partir du support d'enregistrement dans la plate-forme informatique, lorsque toutes les fonctions de sécurité ont été satisfaites,
- à permettre l'exploitation des informations stockées sur le support d'enregistrement dans les limites du droit acquis par l'utilisateur autorisé, et
- au cours de cette exploitation à pouvoir échanger et/ou communiquer, de façon sécurisée, des données avec un réseau auquel la plate-forme informatique est reliée.

2. Procédé selon la revendication 1,
**caractérisé en ce que** la phase de production d'un support d'enregistrement non réinscriptible consiste à définir les informations à protéger, le système d'exploitation de ces informations, un ensemble de paramètres de contrôle pour permettre le fonctionnement du logiciel d'exploitation chargé à partir du support d'enregistrement, et un ensemble de paramètres de sécurité pour sécuriser l'utilisation du support d'enregistrement d'une part, et l'exploitation des informations stockées sur ledit support d'une part, et à enregistrer toutes ces informations, selon un format logique prédéterminé, sur le support d'enregistrement.

3. Procédé selon la revendication 2,
**caractérisé en ce qu'**il consiste, pour sécuriser l'utilisation du support d'enregistrement, à définir des paramètres de sécurité tels qu'un paramètre d'identification propre au support d'enregistrement et un paramètre d'authentification du contenu du support d'enregistrement sous la forme d'une signature cryptée, par exemple.

4. Procédé selon la revendication 2 ou 3, **caractérisé en ce qu'**il consiste, pour pouvoir exploiter le support d'enregistrement, à définir des paramètres de sécurité tels qu'un paramètre concernant un niveau de sécurité requis pour accéder aux informations du support d'enregistrement, et un paramètre propre à ces informations.

5. Procédé selon l'une quelconque des revendications 2 à 4, **caractérisé en ce qu'**il consiste à coder ou encrypter tout ou partie des informations du support d'enregistrement, et à stocker également sur le support d'enregistrement une table de sécurisation contenant les algorithmes de décodage sous une forme cryptée.

6. Procédé selon la revendication 5,
**caractérisé en ce qu'**il consiste à enregistrer dans le support portatif les clés de décodage ou de décryptage des informations stockées sur le support d'enregistrement.

7. Procédé selon l'une quelconque des revendications précédentes, **caractérisé en ce qu'**il consiste à enregistrer dans le support portatif de chaque utilisateur des paramètres tels que le niveau de sécurité requis pour exploiter les informations du support d'enregistrement, et l'identification de ces informations, ces deux paramètres correspondant à ceux enregistrés sur le support d'enregistrement.

8. Procédé selon l'une quelconque des revendications précédentes, **caractérisé en ce que** la phase de configuration ou de transformation d'une plate-forme informatique en un poste de travail sécurisé consiste :
- à intégrer dans ladite plate-forme un dispositif matériel de sécurité et un logiciel de contrôle associé,
- à enregistrer dans le dispositif matériel de sécurité le paramètre d'identification propre au support d'enregistrement, et le paramètre d'identification des informations du support d'enregistrement, et
- à faire identifier par le logiciel de contrôle le paramètre d'identification propre au support d'enregistrement en comparant les paramètres correspondants enregistrés dans le support d'enregistrement et le dispositif matériel de sécurité, le paramètre d'identification des informations du support d'enregistrement en comparant les paramètres correspondants enregistrés dans le support d'enregistrement et le dispositif matériel de sécurité, et le niveau requis pour exploiter les informations en comparant les paramètres correspondants dans le support d'enregistrement et le dispositif portatif, pour s'assurer que le support d'enregistrement est bien conforme à celui qui a été produit.

9. Procédé selon l'une quelconque des revendications précédentes, **caractérisé en ce qu'**il consiste, avant de charger le logiciel d'exploitation à partir du support d'enregistrement, à vérifier, à partir d'un logiciel d'amorçage chargé depuis le support d'enregistrement, que les conditions de sécurité qui ont été satisfaites par ledit support sous le contrôle de la plate-forme informatique, sont également satisfaites par cette dernière sous le contrôle dudit support.

10. Procédé selon l'une quelconque des revendications précédentes, **caractérisé en ce qu'**il consiste à rendre indépendant le système d'exploitation stocké sur le support d'enregistrement et celui de la plate-forme informatique, et à charger si nécessaire un logiciel de configuration à partir dudit support pour fournir les paramètres nécessaires à l'exécution du système d'exploitation stocké sur ledit support.

11. Procédé selon l'une quelconque des revendications précédentes, **caractérisé en ce qu'**il consiste, après chargement du système d'exploitation à partir du disque d'enregistrement, à faire exécuter par ledit système des fonctions de sécurité tant vis-à-vis du support d'enregistrement que de la plate-forme informatique, pour renforcer la sécurité de la mise en oeuvre du procédé.

## Claims

1. A method of making secure and monitoring access to information from a computer platform having a microcomputer, the method being **characterized in that** it consists:
• in producing at least one non-rewritable recording medium on which information such as data and/or applications is recorded, together with operating software for said information;
• in defining authorized users having access rights to the information stored on the recording medium together with possible limits on such access rights, and issuing each user with a portable medium of the smart card type on which information concerning the assigned rights is recorded;
• in inserting a recording medium and a portable medium in readers fitted to the computer platform;
• in configuring or transforming the computer platform of an authorized user into a secure workstation to prevent any hardware and/or software intrusion seeking to gain undue access to the information or to make use thereof instead of an authorized user and without that user's agreement, said transformation stage consisting in causing the computer platform to execute security functions on the basis of parameters recorded on the recording medium, the portable medium, and the computer platform;
• in loading the operating software from the recording medium into the computer platform, once all of the security functions have been satisfied;
• in enabling the information stored on the recording medium to be used within the limits of the rights acquired by the authorized user; and
• during said use, in being able to exchange and/or communicate in secure manner data with a network to which the computer platform is connected.

2. A method according to claim 1, **characterized in that** the stage of producing a non-rewritable recording medium consists in defining the information to be protected, the operating system for said information, a set of check parameters to enable the operating software loaded from the recording medium to operate, and a set of security parameters for making use of the recording medium secure, and for enabling the information stored on said medium to be used, and in recording all said information in a predetermined software format on the recording medium.

3. A method according to claim 2, **characterized in that** to make use of the recording medium secure, it consists in defining security parameters such as an identity parameter specific to the recording medium and an authentication parameter for authenticating the contents of the recording medium, in the form of an encrypted signature, for example.

4. A method according to claim 2 or 3, **characterized in that** in order to make use of the recording medium, it consists in defining security parameters such as a parameter concerning the security level required to access the information of the recording medium, and a parameter specific to said information.

5. A method according to any one of claims 2 to 4, **characterized in that** it consists in encoding or encrypting all or part of the information on the recording medium, and also in storing on the recording medium a security table containing decoding algorithms in encrypted form.

6. A method according to claim 5, **characterized in that** it consists in recording on the portable medium keys for decoding or decrypting the information stored on the recording medium.

7. A method according to any preceding claim, **characterized in that** it consists in recording on the portable medium of each user parameters such as the security level required to use the information on the recording medium, and the identity of said information, these two parameters corresponding to those recorded on the recording medium.

8. A method according to any preceding claim, **characterized in that** the stage of configuring or transforming a computer platform into a secure workstation consists:
• in integrating in said platform a hardware security device and associated checking software;
• in recording on the hardware security device the identity parameter specific to the recording medium, and the identity parameter of the information of the recording medium; and
• in causing the checking software to identify the identity parameter specific to the recording medium by comparing corresponding parameters recorded on the recording medium and the hardware security device, the identity parameter of the information on the recording medium by comparing the corresponding parameters recorded on the recording medium and the hardware security device, and the level required to use the information by comparing the corresponding parameters on the recording medium and on the portable device, to ensure that the recording medium does indeed comply with the medium that was produced.

9. A method according to any preceding claim, **characterized in that**, prior to loading the operating software from the recording medium, it consists in verifying from boot software loaded from the recording medium, that the security conditions which have been satisfied by said medium when monitored by the computer platform are also satisfied by the platform when monitored by said medium.

10. A method according to any preceding claim, **characterized in that** it consists in making the operating system stored on the recording medium independent from the operating system of the computer platform, and in loading, where necessary, configuration software from said recording medium to provide the parameters required for executing the operating system stored on said medium.

11. A method according to any preceding claim, **characterized in that**, after the operating system has been loaded from the recording medium, it consists in causing said system to execute security functions relating both to the recording medium and to the computer platform, in order to reinforce the security for implementing the method.

## Patentansprüche

1. Verfahren zur Sicherung und zur Kontrolle bzw. Steuerung des Zugangs zu Informationen ausgehend von einer Informationsplattform, die mit einem Mikrocomputer ausgerüstet ist, **dadurch gekennzeichnet, dass** es in folgendem besteht:
- Herstellen von wenigstens einem nicht wiedereinschreibbaren Aufzeichnungsträger, auf welchem Informationen, wie die Daten und/oder Anwendungen sowie eine Systemsoftware dieser Informationen gespeichert sind,
- Definieren der autorisierten Benutzer, die ein Recht des Zugangs zu den auf diesem Aufzeichnungsträger gespeicherten Informationen haben und der eventuellen Grenzen dieses Zugangsrechts, indem an jeden Benutzer ein tragbarer Träger vom Typ einer Chipkarte abgegeben wird, worauf die Informationen über die zugestandenen Rechte aufgezeichnet sind,
- Einfügen eines Aufzeichnungsträgers und eines tragbaren Trägers in die Leser bzw. Leseeinrichtungen, mit denen die Informationsplattform ausgerüstet ist,
- Konfigurieren oder Transformieren der Informationsplattform eines autorisierten Benutzers in einen gesicherten Arbeitsplatz zum Sperren jedes materiellen und/oder softwaremäßigen Eindringens, das auf einen ungehörigen Zugang zu Informationen abzielt oder davon hier und am Platz eines autorisierten Benutzers sowie ohne seine Zustimmung davon Gebrauch zu machen, wobei diese Transformationsphase darin besteht, durch die Informationsplattform Sicherheitsfunktionen ausgehend von Parametern, die in dem Aufzeichnungsträger, dem tragbaren Träger und der Informationsplattform gespeichert sind, auszuführen,
- Laden der Systemsoftware ausgehend von dem Aufzeichnungsträger in der Informationsplattform, wenn alle die Funktionen der Sicherheit befriedigt worden sind,
- Gestatten der Nutzung der auf dem Aufzeichnungsträger gespeicherten Informationen in den Grenzen des durch den Benutzer erworbenen Zugangsrechts, und
- im Verlauf dieser Nutzung das Austauschen und/oder Kommunizieren in gesicherter Art und Weise von Daten mit einem Netz, mit dem die Informationplattform verbunden ist, zu ermöglichen.

2. Verfahren gemäß Anspruch 1, **dadurch gekennzeichnet, dass** die Phase der Herstellung eines nicht wiedereinschreibbaren Aufzeichnungsträgers darin besteht, die zu schützenden Informationen, das System der Nutzung dieser Informationen, eine Gesamtheit von Parametern der Kontrolle bzw. Steuerung zum Ermöglichen des Funktionierens der Systemsoftware, die ausgehend von dem Aufzeichnungsträger geladen worden ist, und eine Gesamtheit von Parametern der Sicherheit zum Sichern der Benutzung des Aufzeichnungsträgers einerseits und zur Nutzung der auf diesem Träger gespeicherten Informationen andererseits, zu definieren, und alle diese Informationen gemäß einem vorbestimmten Logikformat auf dem Aufzeichnungsträger zu speichern.

3. Verfahren gemäß Anspruch 2, **dadurch gekennzeichnet, dass** es darin besteht, die Benutzung des Aufzeichnungsträgers zu sichern, Sicherheitsparameter, wie einen Parameter der eigenen Identifikation auf dem Aufzeichnungsträger und einen Parameter der Authentifikation des Inhalts des Aufzeichnungsträgers, beispielsweise in der Form einer geheimen bzw. chiffrierten Signatur, zu definieren.

4. Verfahren gemäß Anspruch 2 oder 3, **dadurch gekennzeichnet, dass** es darin besteht, um den Aufzeichnungsträger nutzen zu können, Sicherheitsparameter, wie einen Parameter, welcher ein Sicherheitsniveau betrifft, das für den Zugang zu Informationen des Aufzeichnungsträgers erforderlich ist, und einen eigenen Parameter zu diesen Informationen zu definieren.

5. Verfahren gemäß irgendeinem der Ansprüche 2 bis 4, **dadurch gekennzeichnet, dass** es darin besteht, alle oder einen Teil der Information des Aufzeichnungsträgers zu kodieren oder zu chiffrieren, und außerdem auf dem Aufzeichnungsträger eine Sicherungs- bzw. Sicherheitstabelle der, welche die Algorithmen der Dekodierung in einer chiffrierten Form enthält, zu speichern.

6. Verfahren gemäß Anspruch 5, **dadurch gekennzeichnet, dass** es darin besteht, auf dem tragbaren Träger die Dekodier- oder Dechiffrierschlüssel für die auf dem Aufzeichnungsträger gespeicherten Informationen aufzuzeichnen bzw. zu speichern.

7. Verfahren gemäß irgendeinem der vorhergehenden Ansprüche, **dadurch gekennzeichnet, dass** es darin besteht, auf dem tragbaren Träger von jedem Benutzer Parameter, wie das Niveau der für die Nutzung der Informationen des Aufzeichnungsträgers erforderlichen Sicherheit, und die Identifikation dieser Informationen aufzuzeichnen, wobei diese beiden Parameter jenen entsprechen, die auf dem Aufzeichnungsträger gespeichert sind.

8. Verfahren gemäß irgendeinem der vorhergehenden Ansprüche, **dadurch gekennzeichnet, dass** die Phase der Konfiguration oder der Transformation einer Informationsplattform in einem gesicherten Arbeitsplatz in folgendem besteht:
- Integrieren einer materiellen Sicherheitseinrichtung und eine zugehörige Kontroll- bzw. Steuerungssoftware in die genannte Plattform,
- Aufzeichnen des eigenen Identifikationsparameters auf dem Aufzeichnungsträger in der materiellen Sicherheitseinrichtung und des Parameters der Identifikation der Informationen des Aufzeichnungsträgers, und
- Bewirken des Identifizierens durch die Software der Kontrolle bzw. Steuerung des eigenen Identifikationsparameters auf dem Aufzeichnungsträger, indem die entsprechenden Parameter, die in dem Aufzeichnungsträger und der materiellen Sicherheitseinrichtung aufgezeichnet bzw. gespeichert sind, verglichen werden, des Parameters der Identifikation der Informationen des Aufzeichnungsträgers, indem die entsprechenden Parameter, welche auf dem Aufzeichnungsträger und der materiellen Sicherheitseinrichtung aufgezeichnet sind, verglichen werden, sowie des für die Nutzung der Informationen erforderlichen Niveaus, indem die entsprechenden Parameter auf dem Aufzeichnungsträger und der tragbaren Einrichtung verglichen werden, um sich zu versichern, dass der Aufzeichnungsträger gut konform mit jenem, der hergestellt worden ist, ist.

9. Verfahren gemäß irgendeinem der vorhergehenden Ansprüche, **dadurch gekennzeichnet, dass** es darin besteht, vor dem Laden der Systemsoftware ausgehend von dem Aufzeichnungsträger zu verifizieren, ausgehend von einer Initiierungssoftware, die seit dem Aufzeichnungsträger geladen worden, dass die Bedingungen der Sicherheit, die durch den genannten Träger unter der Kontrolle bzw. Steuerung der Informationsplattform befriedigt worden sind, auch durch diese letztere unter der Kontrolle bzw. Steuerung des genannten Trägers befriedigt werden.

10. Verfahren gemäß irgendeinem der vorhergehenden Ansprüche, **dadurch gekennzeichnet, dass** es darin besteht, das System der Nutzung, welches auf dem Aufzeichnungsträger gespeichert ist, und jenes der Informationsplattform, unabhängig zu machen und, wenn notwendig, eine Konfigurationssoftware ausgehend von dem genannten Träger zu laden, um die notwendigen Parameter für das Ausführen des auf dem genannten Träger gespeicherten Nutzungssystems zu liefern.

11. Verfahren gemäß irgendeinem der vorhergehenden Ansprüche, **dadurch gekennzeichnet, dass** es darin besteht, nach dem Laden des Nutzungssystems ausgehend von der Aufzeichnungsplatte, zu bewirken, dass durch dieses System die Sicherheitsfunktionen derart gegenüber dem Aufzeichnungsträger sowie derjenigen der Informationsplattform ausgeführt werden, um die Sicherheit des Ausführens des Verfahrens zu verstärken.
